# EUROPÄISCHE PATENTANMELDUNG

(11) **EP 3 489 267 A1**
(43) Veröffentlichungstag der Anmeldung: **29.05.2019**
(21) Anmeldenummer: 17204044.6
(22) Anmeldetag: 28.11.2017
(51) Int. Cl.: C08F 222/14, C04B 26/16, C09K 8/473, F16B 13/14, C08F 222/10

(54) **BIOGENE OLIGOMERE ALS REAKTIVE ZUSATZSTOFFE FÜR DIE HÄRTUNG VON REAKTIVHARZEN**

(71) Anmelder: HILTI Aktiengesellschaft, 9494 Schaan (LI)
(72) Erfinder: Bunzen, Jens, 86159 Augsburg (DE); Bürgel, Thomas, 86899 Landsberg (DE); Gnaß, Beate, 86368 Gersthofen (DE); Jaehnichen, Klaus, 01187 Dresden (DE); Voit, Brigitte, 01187 Dresden (DE)
(74) Vertreter: Hilti Aktiengesellschaft Corporate Intellectual Property

(57) **Zusammenfassung**

Die vorliegende Verbindung betrifft eine Reaktivharz umfassend ein Vinylesterharz als Basisharz und einen oligomeren Itaconsäureester als Reaktivverdünner.

## Beschreibung

Die vorliegende Verbindung betrifft eine Reaktivharz umfassend ein Vinylesterharz als Basisharz und einen oligomeren Itaconsäureester als Reaktivverdünner.

Die Verwendung von Reaktivharzmörteln auf Basis radikalisch härtbarer Verbindungen als Bindemittel ist seit langem bekannt. Im Bereich der Befestigungstechnik hat sich die Verwendung von Reaktivharzen als organische Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente das Reaktivharz und die andere Komponente das Härtungsmittel enthält. Andere, übliche Bestandteile, wie beispielsweise Lösungsmittel einschließlich Reaktivlösungsmittel (Reaktivverdünner), können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet. Als radikalisch härtbare Verbindungen werden häufig, insbesondere für die chemische Befestigungstechnik, Vinylesterharze und ungesättigte Polyesterharze eingesetzt.

Als Basisharze werden aufgrund ihrer vorteilhaften Eigenschaften Vinylesterharze und insbesondere Vinylesterurethanharze eingesetzt, die durch Reaktion von monomeren oder polymeren aromatischen Diisocyanaten und Hydroxy-substituierte Methacrylaten, wie Hydroxyalkylmethacrylat, erhältlich sind. Die EP 0713015 B1 beispielsweise beschreibt Dübelmassen mit ungesättigten Polyesterharzen, Vinylesterharzen einschließlich Vinylesterurethanharzen als Basisharzen. Die Verbindungen derartiger Systeme basieren auf der klassischen Erdölchemie, bei der die Rohstoffe aus fossilen Rohstoffquellen, wie Erdöl, erhalten werden.

Es ist allgemein bekannt, dass die fossilen Rohstoffquellen, wie Erdöl, nicht unerschöpflich sind und irgendwann versiegen werden. Für den Fall, dass die Verfügbarkeit der fossilen Rohstoffquellen abnimmt, besteht die Gefahr, dass die Verbindungen, die für die hohen Anforderungen, die an die chemischen Befestigungssysteme gestellt werden, unerlässlich sind, unter Umständen nicht mehr erhältlich sind.

Daher besteht zukünftig Bedarf an alternativen Systemen auf Basis nachwachsender Rohstoffe mit einem hohen Anteil an Kohlenstoff aus nachwachsenden Rohstoffen, um auch in Zukunft weiterhin hoch spezialisierte chemische Befestigungssysteme bereitstellen zu können.

Die DE 10 2014 103 923 A1 beschreibt beispielsweise Reaktivharzkomponenten, welchen zur Erhöhung des biogenen Anteils biogene Füllstoffe wie z.B. Mehle von Kernen oder Schalen bekannter Früchte (Walnüsse, Kirschen, Oliven), oder von Pflanzenfasern, Ligninen, Tanninen, Polysacchariden oder Zucker zugesetzt wurden. Die reaktiven Komponenten der beschriebenen Harzzusammensetzungen basieren jedoch auf fossilen Rohstoffen. Somit besteht auch ein Bedarf an Basisharzen und Reaktivverdünnern, welche aus biogenen Rohstoffen erhältlich sind.

Geeignete biogene Ausgangsstoffe zur Herstellung reaktiver Komponenten sind beispielsweise Zuckerderivate. Die DE 10 2012 219 476 A1 beschreibt eine Harzmischung auf Basis eines Vinylesterurethanharzes, welches durch Umsetzung von Isosorbid-Derivaten mit Isocyanaten und Hydroxy-(Meth)acrylsäureestern erhalten wird.

Auch Itaconsäure-Derivate sind vielversprechende biogene Ausgangsstoffe, welche durch entsprechende Funktionalisierung zu reaktiven Komponenten für Reaktivharze umgesetzt werden können. Harzzusammensetzungen auf Vinylester-Basis, welche Methacrylat-Derivate und Itaconsäureester als Reaktivverdünner enthalten, sind bekannt. Die WO 2010/108939 A1 beschreibt ein Reaktivharz auf Vinylester-Basis mit reduzierter Viskosität, die dadurch erreicht werden kann, dass der Reaktivverdünner teilweise durch einen Itaconsäureester ersetzt wird. Nachteilig an dem beschriebenen Reaktivharz ist, dass die Reaktivität des Reaktivharzes und dessen Durchhärtung nicht immer gewährleistet ist.

Die DE 10 2012 219 652 A1 beschreibt ebenfalls Reaktivharzkomponenten, welche funktionalisierte Itaconsäure-Derivate als Reaktivverdünner enthalten.

Es besteht somit Bedarf an einem Reaktivharz, das zu einem großen Teil aus Bestandteilen besteht, die auf Basis nachwachsender Rohstoffe erhältlich sind und mit denen die Lagerstabilität und Reaktivität des Reaktivharzes und der daraus hergestellten Reaktivharzkomponente entsprechend der jeweiligen Verwendung gesteuert werden kann.

Dies kann durch ein Reaktivharz nach Anspruch 1 und einer Reaktivharzkomponente nach Anspruch 8 gelöst werden. Des Weiteren betrifft die vorliegende Erfindung ein Mehrkomponenten-System, welches die erfindungsgemäße Reaktivharzkomponente enthält, sowie die Verwendung eines Itaconsäureesters als Reaktivverdünner. Bevorzugte Ausführungsformen sind den Unteransprüchen zu entnehmen.

Ein Gegenstand der Erfindung ist ein Reaktivharz umfassend ein Vinylesterharz als Basisharz und einen oligomeren Itaconsäureester als Reaktivverdünner.

Zum besseren Verständnis der vorliegenden Erfindung werden die folgenden Erläuterungen der hierin verwendeten Terminologie als sinnvoll erachtet. Im Sinne der Erfindung bedeuten:
- *"Basisharz"* ein üblicherweise festes oder hochviskoses radikalisch polymerisierbares Harz, welches durch Polymerisation (z.B. nach Zugabe eines Initiators in Gegenwart eines Beschleunigers) härtet;
- *"Reaktivharz-Masterbatch"* das Reaktionsprodukt der Reaktion zur Herstellung des Basisharzes, also typischerweise eine Mischung aus Basisharz, Stabilisator und weiteren Bestandteilen der Reaktionsmischung;
- *"Reaktivharz"* eine Mischung aus Reaktivharz-Masterbatch, einem Beschleuniger und einem Inhibitor (auch als Beschleuniger-Inhibitor-System bezeichnet), einem Reaktivverdünner und gegebenenfalls weiteren Additiven; das Reaktivharz ist typischerweise flüssig oder viskos und kann zu einer Reaktivharzkomponente weiterverarbeitet werden;
- *"Inhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator"* bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als *"Inhibitor"* bezeichnet
   - die jeweilige Bedeutung des Begriffes erschließt sich aus dem Kontext);
- *"Initiator"* einen Stoff, der (üblicherweise in Kombination mit einem Beschleuniger) reaktionsinitiierende Radikale bildet;
- *"Beschleuniger"* ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;
- *"Reaktivverdünner"* flüssige oder niedrigviskose Monomere und Basisharze, welche andere Basisharze oder den Reaktivharz-Masterbatch verdünnen und dadurch die zu deren Applikation notwendige Viskosität verleihen, zur Reaktion mit dem Basisharz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;
- *"Reaktivharzkomponente"* eine flüssige oder viskose Mischung aus Reaktivharz und Füllstoffen und optional weiteren Komponenten, z.B. Additiven; typischerweise ist die Reaktivharzkomponente eine der beiden Komponenten eines Zweikomponenten-Reaktivharz-Systems zur chemischen Befestigung;
- *"Härterkomponente"* eine Zusammensetzung, die als Härtungsmittel einen Initiatorfür die Polymerisation eines Basisharzes enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;
- *"Zweikomponenten-System"* bzw. *"Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Basisharzes erst nach dem Mischen der beiden Komponenten erfolgt;
- *"Mehrkomponenten-System"* bzw. *"Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Basisharzes erst nach dem Mischen aller Komponenten erfolgt;
- *"(Meth)acryl...*/*...(meth)acryl...",* dass sowohl die "Methacryl.../...methacryl..."- als auch die "Acryl.../...acryl... "-Verbindungen gemeint sein sollen; bevorzugt sind in der vorliegenden Erfindung "Methacryl.../...methacryl..."-Verbindungen gemeint;
- *"ein", "eine", "einer"* als Artikel vor einer chemischen Verbindungsklasse, z.B. vor dem Wort "Itaconsäureester", dass eine oder mehrere unter diese chemische Verbindungsklasse fallende Verbindungen, z.B. verschiedene Itaconsäureester, gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus"*;
- *"etwa"* oder *"circa"* oder "ca." vor einem Zahlenwert einen Bereich von ± 5% dieses Wertes, bevorzugt ± 2% dieses Wertes, bevorzugter ± 1% dieses Wertes, besonders bevorzugt ± 0% dieses Wertes (also genau diesen Wert);
- ein durch Zahlen begrenzter Bereich, z.B. *"von 100°C bis 120°C",* dass die beiden Eckwerte und jeder Wert innerhalb dieses Bereichs einzeln offenbart sind.

Alle in diesem Text genannten Normen (z.B. DIN-Normen oder ISO-Normen) wurden, falls nicht ausdrücklich anders angegeben, in der zum Anmeldetag dieser Anmeldung aktuellen Ausgabe verwendet.

Die vorliegende Anmeldung beschreibt die Synthese kurzkettiger, reaktiver Oligomere aus Itaconsäure und Alkandiolen mittels Schmelzepolykondensation in Gegenwart eines Katalysators. Die erhaltenen Itaconsäureester können ohne aufwändige Aufarbeitung direkt als Reaktivverdünner in Harzmischungen verwendet werden. Durch den Zusatz der Oligomere erhöht sich der Anteil biobasierter Komponenten im Harz.

Ein erster Gegenstand der vorliegenden Erfindung ist ein Reaktivharz, umfassend
i) ein Basisharz, umfassend mindestens ein Vinylesterharz, und
ii) mindestens einen Itaconsäureester der Formel (I), 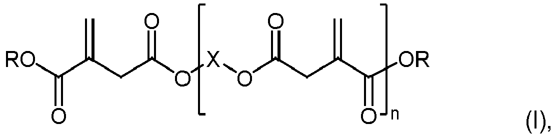 worin R für Wasserstoff oder eine C₁-C₆-Alkylgruppe steht, X für eine C₂-C₁₀-Alkylengruppe steht und n ≥ 2 ist.

Ein Hauptbestandteil des erfindungsgemäßen Reaktivharzes ist somit ein Basisharz, welches ein Vinylesterharz enthält.

Vinylesterharze, die nur in Endstellung ungesättigte Gruppen aufweisen, werden zum Beispiel durch Umsetzung von Epoxid-Monomeren, -Oligomeren oder-Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylesterharze sind (Meth)acrylat-funktionalisierte Harze und Harze, die durch Umsetzung eines Epoxid-Monomers, - Oligomers oder -Polymers mit Methacrylsäure oder Methacrylamid, bevorzugt mit Methacrylsäure, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden.

Demnach handelt es sich bei dem Vinylesterharz bevorzugt um ein Vinylesterurethanharz.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist.

Als Acrylverbindungen sind Acrylsäure und am Kohlenwasserstoffrest substituierte Acrylsäuren wie Methacrylsäure, hydroxylgruppenhaltige Ester der Acryl- bzw.

Methacrylsäure mit mehrwertigen Alkoholen, Pentaerythrittri(meth)acrylat, Glyceroldi(meth)acrylat, wie Trimethylolpropandi(meth)acrylat, Neopentylglycolmono-(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen-(meth)acrylat, Polyoxypropylen(meth)acrylat, zumal solche Verbindungen der sterischen Hinderung der Verseifungsreaktion dienen.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Gemäß einer bevorzugten Ausführungsform der vorliegenden Erfindung handelt es sich bei dem Vinylesterharz um ein Reaktionsprodukt aus Diisocyanatodiphenylmethan (MDI), Hydroxypropyl(meth)acrylat, und Dipropylenglycol. Die Herstellung des Vinylesterharzes ist in EP 0 713 015 A1 beschrieben, die hiermit als Referenz eingeführt und auf deren gesamte Offenbarung verwiesen wird.

Das Vinylesterharz hat bevorzugt ein Molekulargewicht *M̅ₙ* im Bereich von 500 bis 3000 Dalton, stärker bevorzugt von 500 bis 1500 Dalton (nach ISO 13885-1). Das Vinylesterharz hat bevorzugt einen Säurewert im Bereich von 0 bis 150 mg KOH/g Harz, mehr bevorzugt im Bereich von 0 bis 100 mg KOH/g Harz, besonders bevorzugt im Bereich von 0 bis 30 mg KOH/g Harz (nach ISO 2114-2000).

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Bevorzugt enthält das Basisharz mindestens 80,0 Gew.-%, mehr bevorzugt mindestens 90,0 Gew.-%, besonders bevorzugt mindestens 99,0 Gew.-% des Vinylesterharzes, bezogen auf das Gesamtgewicht des Basisharzes. Gemäß einer besonders bevorzugten Ausführungsform besteht das Basisharz aus dem Vinylesterharz.

Gemäß einer bevorzugten Ausführungsform der vorliegenden Erfindung enthält das Reaktivharz das Basisharz in einer Menge von 50,0 bis 95,0 Gew.-%, mehr bevorzugt 60,0 bis 90,0 Gew.-%, noch mehr bevorzugt 70,0 bis 85,0 Gew.-%, besonders bevorzugt 75,0 bis 80,0 Gew.-%, bezogen auf das Gesamtgewicht des Reaktivharzes.

Als weitere Komponente enthält das erfindungsgemäße Reaktivharz einen oligomeren Itaconsäureester als Reaktivverdünner.

Die Itaconsäure und deren Esterderivate wurden als wertvolle Chemikalien erkannt, die aus Biomasse erhältlich sind. Daher eignen sich diese Verbindungen grundsätzlich als Ausgangsverbindung auf Basis nachwachsender Rohstoffe.

Die Erfinder konnten zeigen, dass auf dieser Basis Bestandteile für Reaktivharze bereitgestellt werden können, die keinen negativen Effekt auf die Eigenschaften des Reaktivharzes haben, weder in Bezug auf die Aushärteeigenschaften noch in Bezug auf die Eigenschaften der ausgehärteten Massen. Dies, obwohl bekannt ist, dass die Itaconsäure und deren Ester im Allgemeinen langsamer polymerisieren als Methacrylsäureester unter gleichen Bedingungen. Vielmehr konnte gezeigt werden, dass sich mit den hier verwendeten Verbindungen auf Basis von Itaconsäure Eigenschaften von Reaktivharzen auf Vinylesterharz-Basis gezielt beeinflussen lassen.

Erfindungsgemäß ist der oligomere Itaconsäureester eine Verbindung der allgemeinen Formel (I) 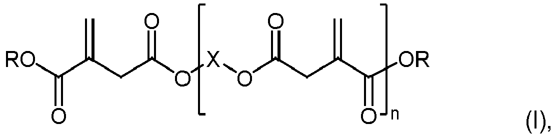 worin R für Wasserstoff oder eine C₁-C₆-Alkylgruppe steht, X für eine C₂-C₁₀-Alkylengruppe steht, und n ≥ 2 ist.

Demnach handelt es sich bei dem erfindungsgemäßen Itaconsäureester bevorzugt um einen oligomeren Itaconsäureester.

Strenggenommen ist der oligomere Itaconsäureester kein reiner Ester, sondern trägt auch eine oder zwei Carbonsäuregruppen, wenn ein oder beide R in der Formel (I) Wasserstoff sind. Der Einfachheit halber wird aber im Folgenden auch diese Form der Formel (I) mit den Estern als "Itaconsäurester" oder "oligomerer Itaconsäureester" bezeichnet, denn auch diese Form der Formel (I) enthält die zentralen Diestergruppen mit X.

Bevorzugt hat der Parameter n einen Wert im Bereich von 2 bis 20, mehr bevorzugt von 3 bis 12, besonders bevorzugt von 4 bis 8.

Zusätzlich oder alternativ hierzu hat der erfindungsgemäße Itaconsäureester der Formel (I) bevorzugt ein Gewichtsmittel der Molmasse M_{w} von mindestens 350 g/mol, bevorzugt von 400 bis 4000 g/mol, mehr bevorzugt von 450 bis 2400 g/mol, noch bevorzugter von 480 bis 2000 g/mol, besonders bevorzugt von 520 bis 1700 g/mol.

Die Verbindungen der Formel (I) können durch Umsetzen der etwa n + 1 - fachen Menge Itaconsäureanhydrid und/oder eines Itaconsäuredialkylesters mit Diolen erhalten werden, wobei Verbindungen mit zwei endständigen Carboxylgruppen und n + 1 radikalisch polymerisierbaren Kohlenstoffdoppelbindungen erhalten werden.

Die Diole können aus nachwachsenden Rohstoffen erhalten werden und sind daher bei der Formulierung von Reaktivharzen, die möglichst weitgehend auf Bestandteilen auf der Basis von nachwachsenden Rohstoffen beruhen, von besonderem Interesse. Dementsprechend handelt sich erfindungsgemäß dabei um aliphatische C₂-C₁₀-Alkandiole, wie Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol und 2,2-Dimethyl-1,3-propandiol (Neopentylglykol).

Besonders bevorzugt handelt es sich bei dem Diol um ein aliphatisches C₃-C₈-Alkandiol, mehr bevorzugt um ein C₄-C₆-Alkandiol. X ist folglich bevorzugt eine C₃-C₈-Alkylengruppe, mehr bevorzugt eine C₄-C₆-Alkylengruppe.

Die Verwendung der C₂-C₁₀-Alkandiole hat den Vorteil, dass sie aus C-2- bis C-10-Grundbausteinen pflanzlichen Ursprungs erhältlich sind. Beispielsweise kann 1,3-Propandiol biotechnologisch aus Glycerin gewonnen werden. Glycerin fällt als Bestandteil aller Pflanzenöle z.B. als Nebenprodukt bei der Fettsäureherstellung und bei der Herstellung von Biodiesel an.

Es wurde beobachtet, dass nur dann lagerstabile Reaktivharze mit Itaconsäureestern der Formel (I) erhalten werden, wenn die endständigen Carboxylgruppen des Di-Itaconsäureesters mit den entsprechenden Alkoholen verestert werden.

Daher ist R in Formel (I) bevorzugt eine C₁-C₆-Alkylgruppe und stärker bevorzugt eine Methyl- oder Ethylgruppe, wobei die Methylgruppe am stärksten bevorzugt ist. Die entsprechenden Alkohole sind ebenfalls aus nachwachsenden Rohstoffen erhältlich, wobei beispielsweise Methanol und Ethanol aus Biomasse erhältlich sind.

Damit sind die Itaconsäureester der allgemeinen Formel (I) vollständig aus nachwachsenden Rohstoffen erhältlich.

Die Itaconsäureester der Formel (I) werden bevorzugt durch Umesterung der etwa n + 1 - fachen Menge eines Itaconsäuredialkylesters mit dem entsprechenden Diol in Gegenwart eines Katalysators hergestellt. Besonders bevorzugt handelt es sich bei dem Itaconsäuredialkylester um Dimethylitaconat. Bei dem Katalysator handelt es sich bevorzugt um eine Übergangsmetallverbindung, besonders bevorzugt um einen Tihaltigen Katalysator, insbesondere bevorzugt ist Titantetrabutanolat (Ti(OBu)₄).

Herstellungsbedingt enthält der erfindungsgemäße Itaconsäureester selbst dann, wenn beide terminalen Carboxylgruppen verestert werden, typischerweise auch Reste von Verbindungen mit OH-Endgruppen der folgenden Strukturen:

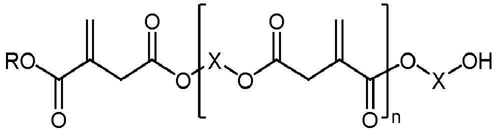

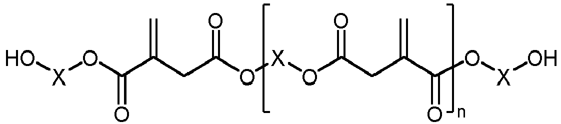

Trotz dieser Verunreinigungen werden diese Produkte im Rahmen der vorliegenden Erfindung als "Itaconsäureester" bezeichnet.

Neben den Verbindungen der Formel (I) kann das Reaktivharz noch weitere niedrigviskose co-polymerisierbare Verbindungen mit einer (Meth)acrylatgruppe als Reaktivverdünner enthalten. Geeignete Reaktivverdünner sind in der EP 1 935 860 A1 und der DE 195 31 649 A1 beschrieben. Grundsätzlich können auch andere übliche Reaktivverdünner, allein oder im Gemisch mit (Meth)acrylsäureestern, eingesetzt werden, z. B. Styrol, α-Methylstyrol, alkylierte Styrole, wie *tert*-Butylstyrol, Divinylbenzol, Vinylether und/oder Allylverbindungen.

Gemäß einer bevorzugten Ausführungsform der vorliegenden Erfindung enthält das Reaktivharz jedoch neben dem mindestens einen Itaconsäureester der Formel (I) keinen weiteren Reaktivverdünner.

Bevorzugt enthält das erfindungsgemäße Reaktivharz 5,0 bis 40,0 Gew.-%, mehr bevorzugt 10,0 bis 30,0 Gew.-%, noch mehr bevorzugt 15,0 bis 25,0 Gew.-%, besonders bevorzugt 18,0 bis 22,0 Gew.-% des mindestens einen Itaconsäureesters der Formel (I), bezogen auf das Gesamtgewicht des Reaktivharzes.

Demnach enthält das erfindungsgemäße Reaktivharz bevorzugt 50,0 bis 95,0 Gew.-%, mehr bevorzugt 60,0 bis 90,0 Gew.-%, noch mehr bevorzugt 70,0 bis 85,0 Gew.-%, besonders bevorzugt 75,0 bis 80,0 Gew.-% des Basisharzes und 5,0 bis 40,0 Gew.-%, mehr bevorzugt 10,0 bis 30,0 Gew.-%, noch mehr bevorzugt 15,0 bis 25,0 Gew.-%, besonders bevorzugt 18,0 bis 22,0 Gew.-% des mindestens einen Itaconsäureesters der Formel (I), bezogen auf das Gesamtgewicht des Reaktivharzes.

Gemäß einer weiter bevorzugten Ausführungsform der Erfindung liegt das Reaktivharz in vorbeschleunigter Form vor, das heißt es enthält mindestens einen Beschleuniger für den Initiator, der als Härtungsmittel fungiert. Bevorzugte Beschleuniger sind aromatische Amine und/oder Salze von Kobalt, Mangan, Zinn, Vanadium oder Cer. Besonders vorteilhaft haben sich als Beschleuniger Aniline, p- und m-Toluidine und Xylidine, die symmetrisch oder asymmetrisch mit Alkyl- oder Hydroxyalkylresten substituiert sind, erwiesen. Beispielhaft können die folgenden bevorzugten Beschleuniger erwähnt werden: N,N-Dimethylanilin, N,N-Diethylanilin, N,N-Diethylolanilin, N-Ethyl-N-ethylolanilin, N,N-Di-isopropanol-*p*-toluidin, N,N-Diisopropyliden-*p*-toluidin, N,N-Dimethyl-p-toluidin, N,N-Diethylol-*p*-toluidin, N,N-Diethylol-*m*-toluidin, N,N-Diisopropylol-*m*-toluidin, N,N-Bis(2-hydroxyethyl)toluidin, N,N-Bis(2-hydroxyethyl)xylidin, N-Methyl-N-hydroxyethyl-*p*-toluidin, Cobaltoctoat, Cobaltnaphthenat, Vanadium(IV)-acetylacetonat und Vanadium(V)-acetylacetonat.

Der Beschleuniger bzw. die Beschleunigermischung wird erfindungsgemäß in einer Menge von 0,05 bis 5,0 Gew.-%, vorzugsweise 1,0 bis 2,0 Gew.-%, bezogen auf das Gesamtgewicht des Reaktivharzes, eingesetzt.

In einer weiteren Ausführungsform der Erfindung enthält das Reaktivharz ferner mindestens noch einen Polymerisationsinhibitor zur Sicherstellung der Lagerstabilität und zur Einstellung der Gelzeit. Als Polymerisationsinhibitoren sind erfindungsgemäß die für radikalisch polymerisierbare Verbindungen üblicherweise verwendeten Polymerisationsinhibitoren geeignet, wie sie dem Fachmann bekannt sind. Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Inhibitoren, die oft Bestandteil von kommerziellen radikalisch härtenden Reaktivharzen sind, kommen Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und N-Oxylradikale in Betracht.

Als N-Oxylradikale können beispielsweise solche verwendet werden, wie sie in der DE 199 56 509 beschrieben sind. Geeignete stabile N-Oxylradikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-Oxylverbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Die Polymerisationsinhibitoren können, abhängig von den gewünschten Eigenschaften der Harzzusammensetzungen, entweder alleine oder als Kombination von zweien oder mehreren davon verwendet werden. Die Kombination der phenolischen und der nicht-phenolischen Polymerisationsinhibitoren ermöglicht dabei einen synergistischen Effekt, wie die Einstellung einer im Wesentlichen driftfreien Einstellung der Gelzeit des Reaktivharzes.

Der Gewichtsanteil der nicht-phenolischen Polymerisationsinhibitoren liegt vorzugsweise im Bereich von 1 ppm bis 1 Gew.-%, vorzugsweise im Bereich von 10 ppm bis 1 Gew.-%, bezogen auf das Gesamtgewicht des Reaktivharzes.

Bevorzugt handelt es sich bei dem Inhibitor um einen phenolischen Inhibitor. Insbesondere bevorzugt sind Brenzkatechin und Butylbrenzkatechine, wie 4-tert-Butylbrenzkatechin, 4,6-Di-tert-butylbrenzkatechin.

Gemäß einer bevorzugten Ausführungsform enthält das erfindungsgemäße Reaktivharz bis zu 1,0 Gew.-%, mehr bevorzugt 0,0001 bis 0,5 Gew.-%, besonders bevorzugt 0,01 bis 0,1 Gew.-% des Inhibitors, bezogen auf das Gesamtgewicht des Reaktivharzes.

Bevorzugt enthält demnach das erfindungsgemäße Reaktivharz, mehr bevorzugt besteht es aus, 50,0 bis 95,0 Gew.-%, mehr bevorzugt 60,0 bis 90,0 Gew.-%, noch mehr bevorzugt 70,0 bis 85,0 Gew.-%, besonders bevorzugt 75,0 bis 80,0 Gew.-% des Basisharzes, 5,0 bis 40,0 Gew.-%, mehr bevorzugt 10,0 bis 30,0 Gew.-%, noch mehr bevorzugt 15,0 bis 25,0 Gew.-%, besonders bevorzugt 18,0 bis 22,0 Gew.-% des mindestens einen Itaconsäureesters der Formel (I) und bis zu 1,0 Gew.-%, mehr bevorzugt 0,0001 bis 0,5 Gew.-%, besonders bevorzugt 0,01 bis 0,1 Gew.-% des Inhibitors, bezogen auf das Gesamtgewicht des Reaktivharzes.

Das erfindungsgemäße Reaktivharz wird zur Herstellung von Reaktivharzkomponenten für die chemische Befestigungstechnik eingesetzt.

Ein weiterer Gegenstand der Erfindung ist daher eine Reaktivharzkomponente, welche zusätzlich zu dem Reaktivharz übliche anorganische oder organische Zuschlagstoffe, wie Füllstoffe, Verdickungsmittel, Thixotropiermittel, nicht reaktive Lösungsmittel, Mittel zur Verbesserung der Fließfähigkeit und/oder Netzmittel enthält. Die Füllstoffe sind vorzugsweise ausgewählt aus der Gruppe bestehend aus Teilchen aus Quarz, Quarzgut, Korund, Calciumcarbonat, Calciumsulfat, Glas und/oder organischen Polymeren unterschiedlichster Größe und Form, beispielsweise als Sand oder Mehl, in Form von Kugeln oder Hohlkugeln, aber auch in Form von Fasern aus organischen Polymeren, wie beispielsweise Polymethylmethacrylat, Polyester, Polyamid oder auch in Form von Mikrokugeln aus Polymeren (Perlpolymerisaten). Bevorzugt und deutlicher verstärkend wirken sich die globulären, inerten Stoffe (Kugelform) aus.

Als Verdickungsmittel oder Thixotropiermittel sind solche auf der Grundlage von Silikaten, Bentonit, Laponit, pyrogener Kieselsäure, Polyacrylaten und/oder Polyurethanen bevorzugt.

Die anorganischen oder organischen Zuschlagstoffe können in einer Menge von 20,0 bis 80,0 Gew.-%, mehr bevorzugt 25,0 bis 60,0 Gew.-%, noch mehr bevorzugt 35,0 bis 55,0 Gew.-%, besonders bevorzugt 40,0 bis 50,0 Gew.-% in der Reaktivharzkomponente enthalten sein, bezogen auf das Gesamtgewicht der Reaktivharzkomponente.

Ein weiterer Gegenstand der Erfindung ist ein Mehrkomponenten-System, das mindestens zwei (räumlich) getrennte Komponenten A und B umfasst. Das Mehrkomponenten-System umfasst zwei oder mehr separate, miteinander verbundene und/oder ineinander verschachtelte Behältnisse, wobei das eine die Komponente A, die Reaktivharzkomponente, und das andere die Komponente B, die Härterkomponente, beinhaltet.

Bevorzugt enthält das erfindungsgemäße Mehrkomponenten-System die Reaktivharzkomponente (Komponente A) und die Härterkomponente (Komponente B) in einem Gewichtsverhältnis von etwa 3:1 bis etwa 7:1, mehr bevorzugt von etwa 4:1 bis etwa 6:1. Besonders bevorzugt enthält das erfindungsgemäße Mehrkomponenten-System die Reaktivharzkomponente (Komponente A) und die Härterkomponente (Komponente B) in einem Gewichtsverhältnis von etwa 5:1.

Das Mehrkomponenten-System kann in Form einer Patrone, einer Kartusche oder eines Folienbeutels vorliegen. Bei der bestimmungsgemäßen Verwendung der erfindungsgemässen Reaktivharzmörtel werden die Komponente A und die Komponente B entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingefüllt, wonach die zu befestigende Einrichtung, wie eine Ankergewindestange oder dergleichen, in das mit dem aushärtenden Reaktivharz beschickte Bohrloch eingebracht und entsprechend justiert wird.

Bevorzugte Härtungsmittel in der Härterkomponente B sind lagerstabile organische Peroxide. Besonders gut geeignet sind Dibenzoylperoxid und Methylethylketonperoxid, ferner *tert*-Butylperbenzoat, Cyclohexanonperoxid, Lauroylperoxid und Cumolhydroperoxid, sowie *tert*-Butylperoxy-2-ethylhexanoat.

Die Peroxide werden dabei in Mengen von 0,2 bis 10 Gew.-%, vorzugsweise von 0,3 bis 3 Gew.-%, bezogen auf die Reaktivharzkomponente, eingesetzt.

Bei einer besonders bevorzugten Ausführungsform des erfindungsgemäßen Mehrkomponenten-Systems enthält die Komponente A neben dem härtbaren Reaktivharz zusätzlich noch eine hydraulisch abbindende oder polykondensierbare anorganische Verbindung, insbesondere Zement, und die Komponente B neben dem Härtungsmittel noch Wasser. Derartige Hybridmörtelsysteme sind ausführlich in der DE 42 31 161 A1 beschrieben. Dabei enthält die Komponente A vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden.

Die Komponente A kann als polykondensierbare anorganische Verbindung auch silikatische, polykondensierbare Verbindungen, insbesondere lösliches, gelöstes und/oder amorphes Siliziumdioxid enthaltende Stoffe umfassen.

Ein weiterer Gegenstand der vorliegenden Erfindung ist die Verwendung von mindestens einem Itaconsäureester der Formel (I) als Reaktivverdünner in einer Reaktivharzkomponente zur chemischen Befestigung eines Verankerungsmittels in einem Bohrloch.

Bevorzugt ist das Verankerungsmittel aus Stahl oder aus Eisen.

Zusätzlich oder alternativ hierzu ist das Bohrloch bevorzugt ein Bohrloch in mineralischem oder metallischem Untergrund, bevorzugt einem Untergrund ausgewählt aus der Gruppe bestehend aus Beton, Porenbeton, Ziegelwerk, Kalksandstein, Sandstein, Naturstein, Glas und Stahl.

Der Vorteil der Erfindung liegt darin, dass durch die Wahl der entsprechenden Itaconsäureester die Aushärteeigenschaften des Reaktivharzes bzw. der diese enthaltenden Reaktivharzkomponente beeinflusst werden können. Darüber hinaus konnte gezeigt werden, dass es möglich ist, konventionelle petrochemie-basierte Bestandteile von Reaktivharzen und damit Bestandteile einer diese Reaktivharze enthaltenden Reaktivharzkomponenten durch biobasierte Komponenten zu ersetzen, ohne dass die Eigenschaften der Reaktivharzkomponente negativ beeinflusst werden.

Die folgenden Beispiele dienen der weiteren Erläuterung der Erfindung.

### AUSFÜHRUNGSBEISPIELE

### 1. Herstellung der oligomeren Itaconsäureester

Das auf ca. 50 °C vorgeheizte Reaktionsgefäß (RC-1, Mettler Toledo) wurde mit 1012,16 g (6,4 mol) Dimethylitaconat (DMI; TCl >98%, stabilisiert mit Hydrochinonmonomethylether (HQME)), 504,56 g (5,6 mol) 1,4-Butandiol (Aldrich, 99%) und 0,72 g HQME (SIGMA Aldrich, ReagentPlus 99%, 0,103 mol% bezogen auf DMI) beladen und die Mischung unter Rühren homogenisiert. Anschließend wurden 10,116 g (1 Gew.-% bezogen auf DMI) Ti(OBu)₄ (Aldrich, 97%) zugegeben. Nach Verschließen der Apparatur wurde stufenweise auf 150°C erhitzt. Ab ca. 125°C Massetemperatur begann das freiwerdende Methanol aus der Apparatur zu destillieren. Es wurde im aufgesetzten Liebigkühler kondensiert und aufgefangen. Nach Start der Reaktion wurde die Temperatur permanent angepasst, um ein gleichmäßiges Abdestillieren des freiwerdenden Methanols zu gewährleisten. Der Fortschritt der Reaktion wurde mittels ¹H-NMR verfolgt. Maximal 5 Stunden nach Start des Abdestillierens des MeOH war die Umesterung abgeschlossen und die Masse wurde auf ca. 50°C abgekühlt. Nach Erreichen dieser Temperatur wurde zur Entfernung des freigesetzten restlichen Methanols Vakuum (max. 20 mbar) angelegt. Nach weiteren 4 h war der Restgehalt an MeOH auf < 0,3 Gew.-% abgesenkt.

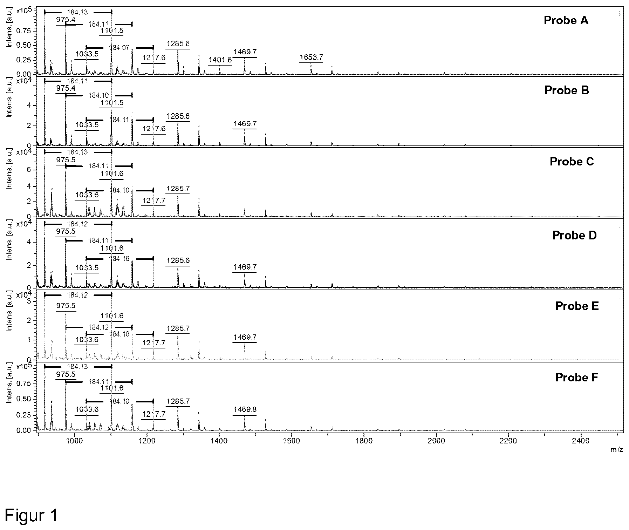

Die Molmasse (M_{w}) der erhaltenen Itaconsäureester wurde wie folgt bestimmt: Die MALDI-Untersuchungen wurden mit einem Autoflex Speed TOF/TOF-System (Bruker Daltonics GmbH) mittels gepulstem Laserstrahl bei einer Beschleunigungsspannung von 20 kV im Reflektor- bzw. Linearmodus durchgeführt. Für die Präparation wurden die Oligomere, die Matrix Dithranol und das Salz Natriumtrifluoracetat in Chloroform gelöst, gemischt und auf ein Target getropft. Nach Verdunsten des Lösungsmittels erfolgte die Messung. Figur 1 zeigt die Ergebnisse der Molmassenbestimmung.

Das Produkt konnte ausgelassen und ohne weitere Aufbereitung für den Einsatz in Reaktivharzen oder Reaktivmörteln weiter verwendet werden. In Tabelle 1 sind die Ergebnisse von insgesamt 6 Versuchen aufgelistet, um die Reproduzierbarkeit der Umesterung zu illustrieren. Es wurden vergleichbare Produkte erhalten.

**Tabelle 1 Ergebnisse der Umesterungsversuche**

| Probe | Umsatz OCH3 [mol%] | Gehalt beidseitig verestertes Butandiol [mol%] | Restgehalt Butandiol [mol%] |
|---|---|---|---|
| A¹⁾ | 77 | 75 | 2 |
| B¹⁾ | 74 | 69 | 3 |
| C¹⁾ | 75 | 73 | 2 |
| D¹⁾ | 75 | 71 | 2 |
| E¹⁾ | 77 | 77 | 2 |
| F²⁾ | 76 | 75 | 2 |

| | | | |
|---|---|---|---|
| ¹⁾ Im 1,8 L-Reaktor durchgeführt ²⁾ Im 500 mL-Reaktor durchgeführt | | | |

### 2. Untersuchung des Härtungsverhaltens

Der in Beispiel 1 erhaltene oligomere Itaconsäureester wurde Reaktivharzen zugesetzt und anschließend deren Härtungsverhalten untersucht. Als Standardharz wurde hierbei eine Mischung aus Urethanmethacrylatharz (Masterbatch A1), Hydroxypropylmethacrylat (HPMA), dem kommerziellen Reaktivverdünner 1,4-Butandioldimethacrylat (1,4-BDDMA), einem aromatischen Amin (als Beschleuniger für die Peroxidzersetzung) und TEMPOL und *tert*-Butylbrenzcatechin (*t*BBK) verwendet. In diesem Reaktivharz wurden unterschiedliche Mengen des Reaktivverdünners 1,4-BDDMA durch die in Beispiel 1 hergestellten Itaconsäureester (Probe F) ersetzt (vgl. Tabelle 2). Zur Härtung wurde das Reaktivharz mit Benzoylperoxid (Perkadox 20S, Akzo Nobel) in einem entsprechenden Verhältnis abgemischt.

**Tabelle 2: Zusammensetzung der untersuchten Reaktivharze**

| Probe | Anteil Itaconsäureester [mol-%] | A1 [g] | 1,4-BDDMA [g] | Itaconsäureester [g] | DiPT [g] | TEMPOL [g] | *t*BBK [g] |
|---|---|---|---|---|---|---|---|
| Referenz | 0% | 42,68 | 25,60 | 0 | 1,47 | 0,02 | 0,22 |
| Probe 1 | 20% | 42,68 | 20,48 | 7,76 | 1,47 | 0,02 | 0,22 |
| Probe 2 | 40% | 39,70 | 14,29 | 14,42 | 1,37 | 0,02 | 0,21 |
| Probe 3 | 60% | 38,37 | 9,20 | 20,9 | 1,32 | 0,02 | 0,20 |
| Probe 4 | 80% | 37,11 | 4,45 | 26,94 | 1,28 | 0,02 | 0,20 |

Anschließend wurde wie folgt die Temperatur-Zeit-Kurve der Härtung aufgenommen: In einem Kunststoffbecher wurden ca. 20 g des zu untersuchenden Reaktivharzes und die entsprechende Menge an Härter (Perkadox 20S, Gewichtsverhältnis 70:30) abgewogen. Da das System empfindlich auf Umgebungstemperatur reagiert, müssen die Komponenten auf 25 °C temperiert werden. Die Temperierung erfolgte in einem Thermostaten (B12/C11 Prüfgerätewerk Medingen GmbH). Die Messung wurde unmittelbar vor dem Mischen der Reaktionskomponenten gestartet. Der Härter wurde der vorgelegten Harzkomponente zugegeben und mittels Holzspatel für 40 s gut verrührt. Die Mischung wurde in zwei Reagenzgläser ca. 6 cm hoch eingefüllt, diese separat jeweils in einen im Thermostaten befindlichen Messzylinder eingehangen. Anschließend wurde jeweils ein mit Silikonpaste eingestrichener Temperatursensor (K-Typ, 150 mm lang ∅ 1,5 mm) mittig 2 cm tief in die Mischung eingetaucht. Da die Umgebungstemperatur bis zum Zeitpunkt des Eintauchens der Sensoren registriert wurde, ist der Kurvenverlauf am Anfang der Messung nicht relevant, weshalb die Temperatur-Zeit-Kurven erst ab 100 Sekunden für die Auswertung verwendet wurden.

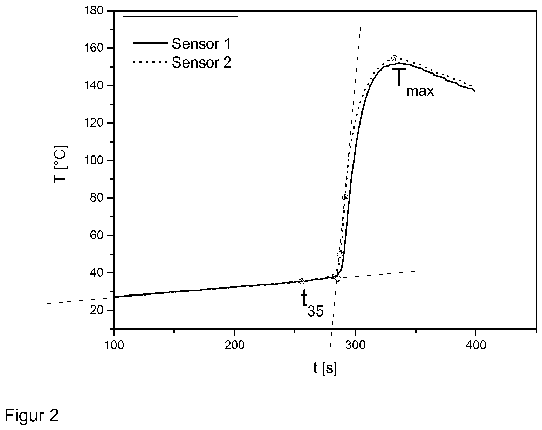

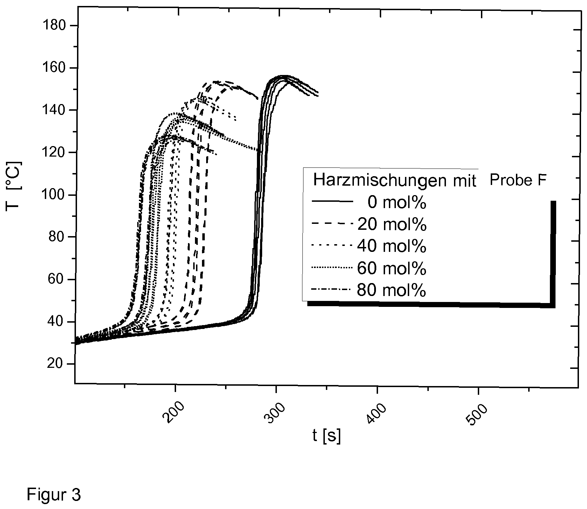

Der Temperaturverlauf wurde mittels der Sensoren, die an einem Voltkraft Datalogger K202 (verbunden mit PC) angeschlossen waren, registriert. Als Ergebnisse wurden in dem Kurvenverlauf die Höchsttemperatur der Kurve (Tₘₐₓ), sowie die Zeit bei 35 °C abgelesen (schematisch dargestellt in Figur 2). Es wurden jeweils 3 Doppelbestimmungen pro System vorgenommen. Die gemessenen Temperatur-Zeit-Kurven sind in Figur 3 gezeigt.

Als Ergebnisse dieser Messungen wurden die maximal erreichte Temperatur der Masse Tₘₐₓ und die Zeit bis zum Erreichen dieser Temperatur Tₘₐₓ ausgewertet. Eine der Referenz vergleichbare Tₘₐₓ (ein Maß für die während der Härtung freiwerdende Polymerisationswärme) weist auf den gewünschten Einbau der zugesetzten Reaktionsprodukte in das sich bildende Netzwerk hin. Die im Folgenden genannten Prozentangaben für den Zusatz der oligomeren Itaconsäureester in mol- % sind bezogen auf den Anteil 1,4-BDDMA in der Mischung. Bei diesen Berechnungen wird die Zahl der Doppelbindungen im Itaconsäureester berücksichtigt, so dass immer eine annähernd konstante Menge an reaktiven Doppelbindungen in der Mischung vorliegt. Die Ergebnisse sind in Tabelle 3 zusammengefasst.

Mit zunehmendem Anteil der Itaconsäureester in dem Reaktivharz sinken die Tₘₐₓ auf ca. 130°C ab, während sich die Zeiten bis zur Einstellung der Tₘₐₓ verkürzen. Die Ergebnisse zeigen, dass das 1,4-BDDMA durch die Itaconsäureester ersetzt werden kann, ohne dass sich dieses negativ auf die Härtungsreaktion auswirkt.

**Tabelle 3 Ergebnisse der Härtungsversuche**

| Probe | mol% 1,4-BDDMA ersetzt durch Itaconsäureester | Tₘₐₓ [°C] | σ [°C] | Tmax [min] | σ [min] |
|---|---|---|---|---|---|
| Referenz | 0 | 156 | 1 | 05:06 | 00:05 |
| Probe 1 | 20 | 153 | 1 | 04:05 | 00:08 |
| Probe 2 | 40 | 146 | 1 | 03:39 | 00:04 |
| Probe 3 | 60 | 137 | 2 | 03:21 | 00:04 |
| Probe 4 | 80 | 128 | 1 | 03:14 | 00:05 |

### 3. Herstellung von Reaktivharz-Systemen

### A1: Reaktivharz-Masterbatch A1 wurde auf folgende Weise hergestellt:

Ein Reaktivharz-Masterbatch mit 65 Gew.-% der Vergleichsverbindung 1 als Basisharz und 35 Gew.-% Hydroxypropylmethacrylat (Visiomer® HPMA; Evonik Degussa GmbH), jeweils bezogen auf das Gesamtgewicht des Reaktivharz-Masterbatches, wurde gemäß dem Verfahren in EP 0 713 015 A1, die hiermit als Referenz eingeführt und auf deren gesamte Offenbarung verwiesen wird, synthetisiert. Das Produkt hat die folgende Struktur, wobei eine Oligomerenverteilung mit n = 0 bis 3 vorliegt:

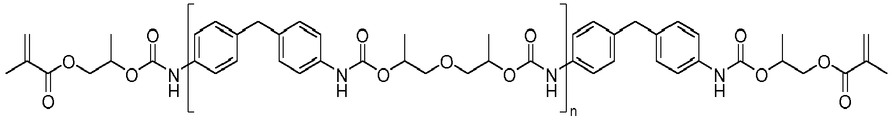

### B1: Reaktivharz-Masterbatch B1 wurde auf folgende Weise hergestellt:

In einem 300 Liter Stahlreaktor mit Innenthermometer und Rührwelle wurden 80400 g Hydroxypropylmethacrylat (Visiomer® HPMA; Evonik Degussa GmbH) vorgelegt und mit 36 g Phenothiazin (D Prills; Allessa Chemie), 70 g 4-Hydroxy-2,2,6,6-tetramethyl-piperidinyl-1-oxyl (TEMPOL; Evonik Degussa GmbH) und 56 g Dioctylzinndilaurat (TIB KAT® 216; TIB Chemicals) versetzt. Der Ansatz wurde auf 60°C erwärmt. Anschließend wurden 69440 g Methylen-di(phenylisocyanat) (MDI; Lupranat® MIS, BASF SE) unter Rühren über 1,5 h zugetropft. Danach wurde weitere 45 Minuten bei 80°C gerührt. Anschließend wurden 50000 g 1,4-Butandioldimethacrylat (Visiomer 1,4-BDDMA, Evonik Degussa GmbH) zugegeben. Es wurde der Reaktivharz-Masterbatch B1 erhalten, der 75 Gew.-% der unten gezeigten Verbindung als Basisharz und 25 Gew.-% 1,4-Butandioldimethacrylat (Visiomer 1,4-BDDMA, Evonik Degussa GmbH), bezogen auf das Gesamtgewicht des Reaktivharz-Masterbatches, enthielt. Die Verbindung weist die folgende Struktur auf:

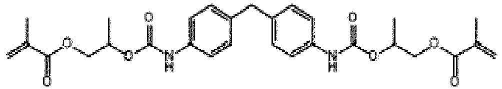

### A2: Reaktivharz-Masterbatch A2 wurde aus Reaktivharz-Masterbatch A1 auf folgende Weise hergestellt:

1147,8 g (57,34 Gew.-%) Masterbatch A1 wurde mit 400 g (20 Gew.-%) 1,4-Butandioldimethacrylat (Visiomer 1,4-BDDMA, Evonik Degussa GmbH), 46 g (2,3 Gew.-%) Di-isopropanol-p-toluidin (BASF SE), 4,6 g (0,23 Gew.-%) Catechol (Catechol Flakes, RHODIA) und 1 g (0,05 Gew.-%) tert-Butylbrenzkatechin (tBBK, CFS EUROPE S.p.A. (Borregaard Italia S.p.A.)) versetzt und bis zur vollständigen Homogenisierung gerührt.

### B2: Reaktivharz-Masterbatch B2 wurde aus Reaktivharz-Masterbatch B1 auf folgende Weise hergestellt:

1013,4 g (50,67 Gew.-%) Masterbatch B1 wurde mit 400 g (20 Gew.-%) 1,4-Butandioldimethacrylat (Visiomer 1,4-BDDMA, Evonik Degussa GmbH), 162,6 g (8,13 Gew.-%) Hydroxypropylmethacrylat (Inchem), 22,4 g (1,12 Gew.-%) Di-isopropanol-p-toluidin (BASF SE) und 0,3 g (0,015 Gew.-%) 4-Hydroxy-2,2,6,6-tetramethyl-piperidinyl-1-oxyl (TEMPOL; Evonik Degussa GmbH) versetzt und bis zur vollständigen Homogenisierung gerührt.

Aus dem Reaktivharz-Masterbatches A2 und B2 wurden nun durch Lösen bzw. Mischen und darauffolgendes vollständiges Homogenisieren die Reaktivharze A3.1, A3.2 und A3.3 bzw. B3.1, B3.2 und B3.3 hergestellt. Die Zusammensetzungen der Reaktivharze sind in Tabellen 4a und 4b zusammengefasst.

**Tabelle 4a: Zusammensetzungen der Reaktivharze (A-Serie)**

| Reaktivharz (Gesamtmenge) | | A3.1 (500 g) | A3.2 (400 g) | A3.3 (336 g) |
|---|---|---|---|---|
| Masterbatch A2 | [g] | 399,6 | 319,7 | 268,2 |
| | *[Gew.-%]* | *79,92* | *79,92* | *79,92* |
| Catechol | [g] | 0,2 | 0,2 | 0,1 |
| | *[Gew.-%]* | *0,04* | *0,05* | *0,03* |
| tBBK | [g] | 0,2 | 0,2 | 0,1 |
| | *[Gew.-%]* | *0,04* | *0,05* | *0,03* |
| 1,4-BDDMA | [g] | 100 | | |
| | *[Gew.-%]* | *20* | | |
| Methylbutandiolitaconat | [g] | | 80 | |
| | *[Gew.-%]* | | *20* | |
| Diethylmalonat | [g] | | | 67,1 |
| | *[Gew.-%]* | | | *20* |

**Tabelle 4a: Zusammensetzungen der Reaktivharze (B-Serie)**

| Reaktivharz (Gesamtmenge) | | B3.1 (336 g) | B3.2 (340 g) | B3.3 (340 g) |
|---|---|---|---|---|
| Masterbatch B2 | [g] | 271,8 | 271,4 | 272,0 |
| | *[Gew.-%]* | *79,94* | *79,94* | *79,94* |
| tBBK | [g] | 0,34 | 0,41 | 0,22 |
| | *[Gew.-%]* | 0,1 | *0,12* | *0,065* |
| 1,4-BDDMA | [g] | 68 | | |
| | *[Gew.-%]* | *20* | | |
| Methylbutandiolitaconat | [g] | | 68 | |
| | *[Gew.-%]* | | *20* | |
| Diethylmalonat | [g] | | | 68 |
| | *[Gew.-%]* | | | *20* |

Aus den Reaktivharzen A3.1, A3.2 und A3.3 bzw. B3.1, B3.2 und B3.3 wurden die Reaktivharzkomponenten A4.1. A4.2 und A4.3 bzw. B4.1. B4.2 und B4.3 folgendermaßen hergestellt:
Das Reaktivharz wurde mit Secar® 80 (Kerneos Inc.), Cab-O-Sil® TS-720 (Cabot Corporation), Aerosil® R-812 (Evonik) und Quarzsand F32 (Quarzwerke GmbH) im Dissolver unter Vakuum vermischt (die jeweiligen Mengen sind der untenstehenden Tabelle 3a und 3b zu entnehmen). Das Mischen erfolgte mit einem PC Laborsystem Dissolver vom Typ LDV 0.3-1 für 8 Minuten (2 min: 2500 U/min; dann 6 min: 3500 U/min; jeweils bei einem Druck <100mbar) mit einer 55 mm Dissolverscheibe und einem Randabstreifer. Die Zusammensetzungen der Reaktivharzkomponenten sind in Tabellen 5a und 5b zusammengefasst.

**Tabelle 5a: Zusammensetzungen der Reaktivharzkomponenten (A-Serie)**

| Reaktivharzkomponente (Gesamtmenge) | | A4.1 (900 g) | A4.2 (900 g) | A4.3 (720 g) |
|---|---|---|---|---|
| Reaktivharz | [g] | 310,5 (A3.1) | 310,5 (A3.2) | 248,0 g (A3.3) |
| | *[Gew.-%]* | *34.5* | *34,5* | *34,5* |
| Secar® 80 | [g] | 166,5 | 166,5 | 133,4 |
| | *[Gew.-%]* | *18,5* | *18,5* | *18,5* |
| Cab-O-Sil® TS-720 | [g] | 9,0 | 9,0 | 7,2 |
| | *[Gew.-%]* | *1,0* | *1,0* | *1,0* |
| Aerosil® R-812 | [g] | 16,2 | 16,2 | 13,0 |
| | *[Gew.-%]* | *1,8* | *1,8* | *1,8* |
| Quarzsand F32 | [g] | 398 | 398 | 318,2 |
| | *[Gew.-%]* | *44,2* | *44,2* | *44,2* |

**Tabelle 5b: Zusammensetzungen der Reaktivharzkomponenten (B-Serie)**

| Reaktivharzkomponente (Gesamtmenge) | | B4.1 (840 g) | B4.2 (840 g) | B4.3 (835 g) |
|---|---|---|---|---|
| Reaktivharz | [g] | 289,9 (B3.1) | 289,9 (B3.2) | 289 (B3.3) |
| | *[Gew.-%]* | *34,5* | *34,5* | *34,5* |
| Secar® 80 | [g] | 155,3 | 155,3 | 154,6 |
| | *[Gew.-%]* | *18,5* | *18,5* | *18,5* |
| Cab-O-Sil® TS-720 | [g] | 8,9 | 8,4 | 8,3 |
| | *[Gew.-%]* | *1,0* | *1,0* | *1,0* |
| Aerosil® R-812 | [g] | 15,2 | 15,1 | 15,0 |
| | *[Gew.-%]* | *1,8* | *1,8* | *1,8* |
| Quarzsand F32 | [g] | 371,2 | 371,0 | 370,0 |
| | *[Gew.-%]* | *44,2* | *44,2* | *44,2* |

Aus den Reaktivharzkomponenten A4.1, A4.2 und A4.3 wurden nun die Zweikomponenten-Reaktivharz-Systeme A5.1, A5.2 und A5.3 folgendermaßen hergestellt:
Zur Herstellung der Zweikomponenten-Reaktivharz-Systeme wurden die Reaktivharzkomponenten (Komponente (A)) mit einer Härterkomponente (Komponente (B)) des kommerziell erhältlichen Produkts HIT HY-200 (Hilti Aktiengesellschaft; Chargennummer: 8103926) kombiniert und in Plastikkartuschen (Firma Ritter GmbH; Volumenverhältnis A:B = 5:1) mit den Innendurchmessern 32,5 mm (Komponente (A)) bzw. 14 mm (Komponente (B)) gefüllt.

Aus den Reaktivharzkomponenten B4.1, B4.2 und B4.3 wurden nun die Zweikomponenten-Reaktivharz-Systeme B5.1, B5.2 und B5.3 folgendermaßen hergestellt:
Zur Herstellung der Zweikomponenten-Reaktivharz-Systeme wurden die Reaktivharzkomponenten (Komponente (A)) mit einer Härterkomponente (Komponente (B)) des kommerziell erhältlichen Produkts HIT-CT 1 (Hilti Aktiengesellschaft; Chargennummer: 8600465) kombiniert und in Plastikkartuschen (Firma Ritter GmbH; Volumenverhältnis A:B = 3:1) mit den Innendurchmessern 47 mm (Komponente (A)) bzw. 28 mm (Komponente (B)) gefüllt.

### Auswertung:

Die Reaktivharze A3.1 bis A3.3 sowie die Reaktivharze B3.1 bis B3.3 wurden auf ihre Reaktivität hin untersucht. Da das Härtungssystem der Reaktivharze der A-Serie deutlich mehr Initiatorradikale erzeugt als die Reaktivharze der B-Serie, soll hierüber durch einen Vergleich der beiden Systeme gezeigt werden, ob ein initiatorradikalmengenabhängiger Unterschied bei der Verwendung von itaconathaltigen Reaktivverdünnern existiert. Es soll folglich die Frage beantwortet werden, ob annähernd die gleiche Menge Itaconat bei den beiden sehr unterschiedlichen Systemen copolymerisiert. Als indirektes grobes aber zu diesem Zweck ausreichendes Maß wurde die bei der Reaktion freiwerdende Wärmemenge erfasst. Zu diesem Zweck wurden die Harze mit gipsphlegmatisiertem Dibenzoylperoxid (Perkadox 20S, AkzoNobel) intensiv gemischt. Im Fall der Reaktivharze der A-Serie wurden 70 g Reaktivharz intensiv mit 30 g Perkadox 20S gemischt. Im Falle der Reaktivharze der B-Serie wurden 70 g Reaktivharz intensiv mit 6 g Perkadox 20S gemischt. Gemessen wurde die Reaktivitätsdauer: darunter versteht man die Harzreaktivität (t_{r,25} → Tₘₐₓ) eines Harzes oder einer Harz-haltigen Zusammensetzung ausgedrückt als die Zeitspanne gemessen vom Zeitpunkt der Zugabe eines Initiators zur Initialisierung der Härtung an bis zu dem Zeitpunkt, bei dem die Zusammensetzung die Maximaltemperatur (Tₘₐₓ) erreicht hat. Gemessen wurde auch die Maximaltemperatur (Tₘₐₓ). Die Messung wurde mit einem herkömmlichen Gerät (Geltimer, Fa. WKS Informatik) durchgeführt. Sowohl das Reaktivharz als auch das Perkadox wurden zuvor in einem Trockenschrank auf 25°C temperiert. Die Mischung wurde nach Zugabe des Initiators bis zu einer Höhe von 4 cm unterhalb des Randes in ein Teströhrchen gefüllt, wobei das Teströhrchen bei einer Temperatur von 25°C gehalten wurde (DIN 16945, DIN EN ISO 9396). In die Mischung wurde sofort ein Temperaturfühler eingebracht, der eine Temperatur-Zeit-Kurve aufzeichnete. Tabelle 6 zeigt die Ergebnisse dieser Messungen:

**Tabelle 6: Ergebnisse der Temperaturmessungen**

| Reaktivharz | t_{r,25} → Tₘₐₓ [mm:ss] | Tₘₐₓ[°C] |
|---|---|---|
| A3.1 | 08:25 | 160 |
| A3.2 | 07:16 | 147 |
| A3.3 | 09:24 | 141 |
| B3.1 | 09:37 | 166 |
| B3.2 | 08:33 | 145 |
| B3.3 | 07:02 | 142 |

Die Reaktivitätsdauer der Harze ist im üblichen Bereich dieser Messungen vergleichbar. Auch die Form der Kurven, an der man eine mögliche Retardierung erkennen könnte, war gleich, was eine normale Aushärtung anzeigt.

Beide Positiv-Referenzen A3.1 und B3.1 mit 20 Gew.-% 1,4-Butandioldimethacrylat zeigen, dass eine vollständige Polymerisation einen Temperaturanstieg bis ca. 160 bzw. 166°C erzeugen kann. Beide Negativ-Referenzen A3.3 und B3.3 mit 20 Gew.-% Diethylmalonat zeigen, dass bei Einsatz von 20 Gew.-% unreaktivem Material die Temperatur nur auf ca. 141 bzw. 142°C steigen kann. Die Harze der erfinderischen Beispiele A3.2 und B3.2 zeigen einen jeweiligen Temperaturanstieg auf 147 bzw. 145°C.

Um die Auswirkungen des Methylbutandioldiitaconat-Oligomers im Vergleich zu den Referenzen zu untersuchen, wurden die Verbundspannungen der Zweikomponenten-Reaktivharz-Systeme bestimmt. Zur Bestimmung der Verbundspannungen (Lastwerte) der ausgehärteten Befestigungsmassen wurden Ankergewindestanden M12 in Bohrlöcher in Beton C20/25 mit einem Durchmesser von 14 mm und einer Bohrlochtiefe von 72 mm, die mit den Reaktivharzmörtel-Zusammensetzungen gefüllt wurden, eingeführt. Die Verbundspannungen wurden durch zentrisches Ausziehen der Ankergewindestangen ermittelt. Es wurden jeweils fünf Ankergewindestangen gesetzt und nach 24 Stunden Aushärtung die Verbundspannung bestimmt. Die Befestigungsmassen wurden über einen Statikmischer (Mischer HIT-RE-M; Hilti Aktiengesellschaft) aus den Kartuschen ausgepresst und in die Bohrlöcher injiziert. Zur Ermittlung der Verbundspannung wurden folgende Bohrlochbedingungen eingestellt: das Bohrloch wurde in trockenem Beton hammergebohrt und durch Reinigung staubfrei gemacht. Das Setzen, Aushärten und Ausziehen der Ankerstange erfolgte bei Raumtemperatur. Tabelle 7 zeigt die Ergebnisse dieser Messungen. Bei den gezeigten Verbundspannungen handelt es sich um Mittelwerte aus fünf Messungen.

**Tabelle 7: Verbundspannungen**

| Reaktivharz-System | Verbundspannung [N/mm²] |
|---|---|
| A5.1 | 30,7 |
| A5.2 | 26,8 |
| A5.3 | 15,5 |
| B5.1 | 15,9 |
| B5.2 | 13,3 |
| B5.3 | 12,3 |

Die Ergebnisse zeigen, dass die Reaktivharz-Systeme A5.2 und B5.2, welche jeweils den erfindungsgemäßen Itaconsäureester enthalten, eine mit den Positiv-Referenzen A5.1 und B5.1, welche einen fossilen Reaktivverdünner enthalten, vergleichbare Verbundspannung aufweisen. Durch den Einsatz des erfindungsgemäßen biogenen Reaktivverdünners werden somit die Härtungseigenschaften und die Verbundspannung des resultierenden Reaktivharz-Systems nicht beeinträchtigt.

### KURZE BESCHREIBUNG DER FIGUREN

- Figur 1: zeigt die Ergebnisse der MALDI-Untersuchungen zur Molmassenbestimmung der oligomeren Itaconsäureester; Probe F ist das in den Ausführungsbeispielen verwendete Oligomer;
- Figur 2: zeigt eine schematische Darstellung der Auswertung von Temperatur-Zeit-Kurven;
- Figur 3: zeigt die in Beispiel 2 gemessenen Temperatur-Zeit-Kurven

## Patentansprüche

1. Reaktivharz, umfassend
i) ein Basisharz, umfassend mindestens ein Vinylesterharz, und
ii) mindestens einen Itaconsäureester der Formel (I), 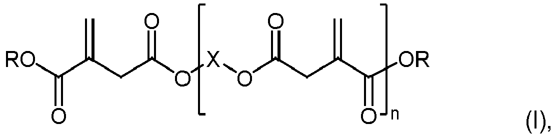 worin R für Wasserstoff oder eine C₁-C₆-Alkylgruppe steht, X für eine C₂-C₁₀-Alkylengruppe steht, und n ≥ 2 ist.

2. Reaktivharz nach Anspruch 1, wobei der Itaconsäureester der Formel (I) ein Gewichtsmittel der Molmasse M_{w} von mindestens 500 g/mol aufweist.

3. Reaktivharz nach Anspruch 1 oder 2, wobei der Itaconsäureester der Formel (I) vollständig aus nachwachsenden Rohstoffen erhältlich ist.

4. Reaktivharz nach einem der vorhergehenden Ansprüche, wobei es sich bei dem Vinylesterharz um ein Vinylurethanesterharz handelt.

5. Reaktivharz nach einem der vorhergehenden Ansprüche, weiterhin umfassend mindestens einen Inhibitor.

6. Reaktivharz nach Anspruch 5, wobei der mindestens eine Inhibitor ausgewählt ist aus der Gruppe bestehend aus 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin, 4-tert-Butylbrenzkatechin, 4,6-Di-tert-butylbrenzkatechin, Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon sowie Gemischen aus diesen.

7. Reaktivharz nach einem der vorhergehenden Ansprüche, enthaltend
i) 50,0 bis 95,0 Gew.-% des Basisharzes, umfassend mindestens ein Vinylesterharz,
ii) 5,0 bis 40,0 Gew.-% des mindestens einen Itaconsäureesters der Formel (I), und
iii) bis zu 1,0 Gew.-% des mindestens einen Inhibitors,
bezogen auf das Gesamtgewicht des Reaktivharzes.

8. Reaktivharzkomponente, umfassend ein Reaktivharz nach einem der Ansprüche 1 bis 7 und mindestens einen anorganischen oder organischen Zuschlagstoff.

9. Reaktivharzkomponente nach Anspruch 8, wobei der mindestens eine anorganische oder organische Zuschlagstoff ausgewählt ist aus der Gruppe bestehend aus Füllstoffen, Verdickungsmitteln, Thixotropiermitteln, nicht reaktiven Lösungsmitteln, Mitteln zur Verbesserung der Fließfähigkeit, Netzmitteln oder Gemischen aus diesen.

10. Reaktivharzkomponente nach Anspruch 8 oder 9, enthaltend 30 bis 80 Gew.-% des mindestens eines anorganischen oder organischen Zuschlagstoffs, bezogen auf das Gesamtgewicht der Reaktivharzkomponente.

11. Mehrkomponenten-System, umfassend
A) die Reaktivharzkomponente nach einem der Ansprüche 8 bis 10, und
B) eine Härterkomponente.

12. Mehrkomponenten-System nach Anspruch 11, wobei die Härterkomponente einen Radikalinitiator als Härtungsmittel und gegebenenfalls anorganische und/oder organische Zuschlagstoffe enthält.

13. Mehrkomponenten-System nach Anspruch 11 oder 12, wobei das Gewichtsverhältnis der Reaktivharzkomponente zur Härterkomponente im Bereich von etwa 3:1 bis etwa 7:1 liegt.

14. Verwendung von mindestens einem Itaconsäureester der Formel (I) als Reaktivverdünner in einem Reaktivharz zur chemischen Befestigung.

15. Verwendung nach Anspruch 14, wobei die chemische Befestigung die Befestigung eines Verankerungsmittels in einem Bohrloch ist, und das Verankerungsmittel bevorzugt aus Stahl oder Eisen ist.
